## Europäisches Patentamt

# European Patent Office

## Office européen des brevets

(11) Veröffentlichungsnummer: **0 076 989**

**B1**

(12) # EUROPÄISCHE PATENTSCHRIFT

(45) Veröffentlichungstag der Patentschrift:
**13.01.88**

(51) Int. Cl.⁴: **G 01 P 13/00**

(21) Anmeldenummer: **82109119.6**

(22) Anmeldetag: **02.10.82**

(54) Durchflussanzeiger für Hydraulikanlagen.

(30) Priorität: **14.10.81 DE 3140775**

(43) Veröffentlichungstag der Anmeldung:
**20.04.83 Patentblatt 83/16**

(45) Bekanntmachung des Hinweises auf die Patenterteilung:
**13.01.88 Patentblatt 88/2**

(84) Benannte Vertragsstaaten:
**DE FR GB SE**

(56) Entgegenhaltungen:
**DE-B-1 203 970**
**FR-A-1 456 868**
**FR-A-2 312 017**
**US-A-1 490 901**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **Leberfinger, Kurt, Pfaffenäckerweg 16, D-7074 Mögglingen (DE)**
Erfinder: **Tischer, Werner, Im Brühl 33, D-7072 Heubach- Lautern (DE)**

EP 0 076 989 B1

LIBER, STOCKHOLM 1988

## Beschreibung

## Stand der Technik

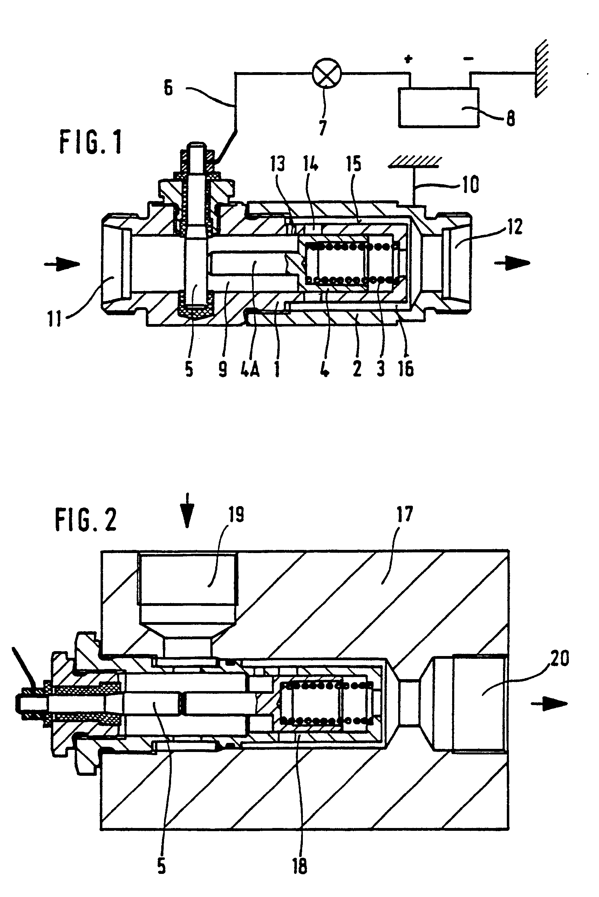

Ein Durchflußanzeiger nach dem Oberbegriff des Patentanspruchs ist bereits aus der DE-B-12 03 970 (Fig. 1) bekannt. Derartige Durchflußanzeiger zeigen durch ein optisches oder akustisches Signal an, ob die Servopumpe, z. B. einer Hilfskraftlenkung, einen für die Betriebssicherheit des Fahrzeugs ausreichenden Drucköstrom liefert. Der bekannte Durchflußanzeiger weist einen gegen Federkraft in einem Gehäuse verschiebbaren Kolben auf, in welchen ein mit einem Trapezgewinde versehener Bolzen eingepreßt ist. Über dieses Trapezgewinde kann ein gedrosselter Ölstrom vom Zulauf- zum Ablaufanschluß gelangen. Bei ausreichendem Ölstrom wird der Kolben infolge der Drosselwirkung durch den Staudruck in Richtung eines Kontaktstiftes bewegt, wobei eine Durchtrittsöffnung am Kolben in Form eines Überströmkanals die maximale Durchflußmenge ermöglicht. Dabei kommt ein mit dem Kolben verbundenes Führungsstück an einem Kontaktstift zur Anlage, das einen Stromkreis schließt und so den einwandfreien Ölfluß anzeigt. In den Zulaufanschluß vor den Kolben ist ein Filter eingebaut, dessen Maschengröße kleiner als der Querschnitt des Trapezgewindes ist. Mit diesem Filter sollen Verunreinigungen vom Trapezgewinde ferngehalten werden. Durch das engmaschige Filter ist der maximale Durchflußquerschnitt begrenzt. Außerdem ergibt sich bei größeren Durchflußmengen durch die Filterwirkung ein relativ hoher Staudruck vor dem Sieb, der bei erhöhtem Schmutzanfall zu dessen Zerstörung führen kann. Eine weitere Problematik ergibt sich aus der geeigneten Abstimmung der Durchlaufquerschnitte von Trapezgewinde und Filter. Nachteilig ist schließlich auch noch die Viskositätsabhängigkeit durch das Trapezgewinde.

Ein weiterer Durchflußanzeiger, welcher mit einem gegen Fedekraft verschiebbaren Kolben arbeitet, ist aus der FR-A-14 56 868 bekannt. Auf der dem Zulauf zugekehrten Stirnseite des Kolbens ist eine einzige, verhältnismäßig enge Blendenbohrung vorgesehen, durch die sowohl die für das Schließen des Stromkreises (Kolbenverschiebung nach oben) benötigen Schaltmenge als auch die für den einwandfreien Betrieb benötigte Durchflußmenge bestimmt ist. Mit einer engen Blendenbohrung sind daher nur kleine Durchflußmengen möglich. Ist dagegen eine größere Blendenbohrung vorgesehen, so kann zwar die Durchflußmenge erhöht werden, jedoch mit dem Nachteil einer verhältnismäßig langen Ansprechzeit bis zum Erreichen des vollen Ölstromes bzw. bis zum Schließen des Stromkreises. In einer solchen Anordnung mit einer einzigen Blendenbohrung ergibt sich insbesondere bei einem engen Durchlaufquerschnitt ein großer Druckabfall und damit auch ein hoher Energieverlust.

Schließlich zeigt die FR-A-2 312 017 noch einen Durchflußanzeiger mit einem Schwimmer, der einen Permanentmagnet enthält. Bei der Ölstromversorgung eines an einen Auslaß angeschlossenen Verbrauchers hebt der Schwimmer von einem Sitz nach oben ab und gibt eine Öffnung frei. Durch die Aufwärtsbewegung des Schwimmers schließt ein Reed-Kontakt, der die ordnungsgemäße Funktion über eine Kontrollampe anzeigt. Da der Schwimmer ein verhältnismäßig geringes Gewicht hat, hebt dieser schon bei sehr kleinen Durchflußmengen von seinem Sitz ab. Eine zugehörige Kontrollampe zeigt also schon Betriebsbereitschaft an, obwohl der volle Ölstrom noch nicht zur Verfügung steht.

Es ist Aufgabe der Erfindung, einen Durchflußanzeiger zu schaffen, der mit einer kurzen Ansprechzeit zwischen dem Schaltstrom (Mindeststrom) und dem vollem Ölstrom arbeitet. Dabei soll der Schaltstrom möglichst genau eingehalten und überwacht werden. Eine weitere Forderung besteht darin, den Aufbau des Gerätes bei kleiner Baugröße einfach, betriebssicher und verlustarm zu gestalten.

Diese Aufgabe ist durch die Merkmale des Patentanspruchs 1 gelöst.

Nach der Erfindung weist eine den Kolben umgebende Ventilhülse als Drosseleinrichtung eine ständig geöffnete Querbohrung auf. Hinter dieser Querbohrung befinden sich in der Ventilhülse in Öffnungsrichtung des Kolbens eine oder mehrere Durchtrittsöffnungen für den maximalen Ölstrom. Da der Weg des Kolbens bis zur Öffnung des großen Durchtrittsquerschnitts klein ist, arbeitet das Gerät mit einer kurzen Ansprechzeit, wobei eine Kontrollampe die Betriebsbereitschaft erst bei Erreichen des vollen Ölstromes durch Erlöschen anzeigt. Außerdem ist es möglich, den steuerbaren Durchtrittsquerschnitt unabhängig von der den Schaltstrom bestimmenden Drossel groß zu wählen, so daß der Durchflußwiderstand nur gering ist. Die Energieverluste sind daher unbedeutend. Die Querbohrung ist als Stromblende ausgeführt, die eine turbulente Strömung erzeugt. Der Durchflußanzeiger arbeitet daher temperaturunabhängig. Er kann sowohl für den Einbau in eine Leitung als auch in einen Ventilblock vorgesehen werden. Das Gerät ist preisgünstig herstellbar und arbeitet schwingungsfrei.

## Erläuterung der Erfindung

Zwei Ausführungsbeispiele der Erfindung sind nachfolgend anhand von in der Zeichnung dargestellten Längsschnitten näher erläutert.

Der Durchflußanzeiger nach Fig. 1 weist als Gehäuse eine Ventilhülse 1 und eine diese umgebende Schraubhülse 2 auf. In der Ventilhülse 1 ist ein gegen die Rraft einer Feder 3 verschiebbarer Kolben 4 mit einem Anschlagbolzen 4A geführt. In der dargestellten Ausgangsstellung wird der Kolben 4 gegen einen isolierten Kontaktstift 5 gedrückt. Der Kontaktstift 5 ist über eine Leitung 6 unter Zwischenschaltung der Kontrollampe 7 an eine Batterie 8 angeschlossen. Mit 10 ist eine Mässeleitung bezeichnet. Ein Zulaufanschluß 11 ist in der Ventilhülse 1 und ein Ablaufanschluß 12 in der Schraubhülse 2 vorgesehen. Der Zulaufanschluß 11 mündet in eine dem Kolben 4 vorgelagerte Kammer 9.

Nach der Erfindung weist die Ventilhülse 1 für den Schaltstrom eine feste Drossel in Form einer Querbohrung 13 auf. Durch diese Querbohrung 13 ist die Durchflußmenge bestimmt, bei welcher am Kolben 4 ein Differenzdruck erzeugt wird, dessen Kraft die Feder 3 überwinden kann. Dicht hinter der Querbohrung 13 befinden sich eine oder mehrere Durchtrittsöffnungen 14 mit großem Querschnitt für den vollen Ölstrom, der zum Betrieb, z. B. einer Hilfskraftlenkung, ausreicht. Die Ventilhülse 1 weist einen Absatz 15 auf, so daß, zusammen mit der Schraubhülse 2, ein zum Ablaufanschluß 12 führender Ringkanal 16 entsteht.

**Die Wirkungsweise**

Bei eingeschalteter Zündung ist der Stromkreis geschlossen und die Kontrollampe 7 leuchtet auf. Dabei liegt der Bolzen 4A des Kolbens 4 am Kontaktstift 5 an. Bei Motorleerlauf brennt die Lampe 7 nur dann, wenn die vom Motor angetriebene Pumpe infolge eines Deffektes kein Öl liefern sollte. Wenn die Pumpe normal fördert, wird das Drucköl der Kammer 9 zugeführt und am Kolben 4 bildet sich infolge der als Drossel wirkenden Querbohrung 13 ein Staudruck aus. Der Kolben ist deshalb gegen die Wirkung der Feder 3 in Öffnungsrichtung verstellt, so daß der Hauptanteil des geförderten Drucköls über die Durchtrittsöffnung 14 und den Ringkanal 16 zum Ablaufanschluß 12 gelangen kann. Da sich der Anschlagbolzen 4A nicht mehr am Kontaktstift 5 in Anlage befindet, ist der Stromkreis unterbrochen.

Das Ausführungsbeispiel nach Fig. 1 eignet sich besonders für den Einbau in Leitungen. Fig. 2 zeigt eine zum Einbau in ein Gehäuse 17 eines Ventilblocks geeignete Variante. Gegenüber Fig. 1 ist hier lediglich eine Ventilhülse 18 als Einschraubpatrone abgewandelt und der Zulauf- und der Ablaufanschluß 19 bzw. 20 stehen winklig zueinander. Alle übrigen Teile sind mit Fig. 1 baugleich. Der Kontaktstift 5 ist hier koaxial mit der Ventilhülse 18 verschraubt.

**Patentansprüche**

1. Durchflußanzeiger für Hydraulikanlagen, insbesondere zum Anzeigen der Betriebsbereitschaft von Pumpen, mit folgenden Merkmalen:
- in einem Gehäuse ist ein isolierter Kontaktstift (5) zum Anschluß eines elektrischen Signalstromkreises vorgesehen;
- das Gehäuse weist einen Zulauf- (11) und einen Ablaufanschluß (12) für Drucköl auf;
- zwischen den beiden Anschlüssen (11 und 12) ist in einer Bohrung ein axial beweglicher, federbelasteter Kolben (4) vorgesehen;
- der Zulauf- (11) und der Ablaufanschluß (12) sind über eine den Schaltstrom bestimmende, als Drosseleinrichtung ausgebildete erste Durchrittsöffnung miteinander verbunden;
- der Kolben (4) ist bei ausreichendem Drucölstrom durch den Staudruck verschiebbar, wobei eine zusätzliche Durchtrittsöffnung (14) freigegeben wird;
- die Verschiebbarkeit des Kolbens (4) erfolgt zwischen zwei Anschlägen, von denen der eine der Kontaktstift (5) ist, gekennzeichnet durch folgende Merkmale:
- eine den Kolben (4) umgebende Ventilhülse (1) weist als Drosseleinrichtung eine ständig geöffnete Querbohrung (13) auf und
- eine oder mehrere Durchtrittsöffnungen (14) befinden sich in der Ventilhülse (1) in Öffnungsrichtung des Kolbens (4) hinter der Querbohrung (13).

2. Durchflußanzeiger nach Anspruch 1, dadurch gekennzeichnet, daß der Kolben (4) einen Anschlagbolzen (4A) für den Kontaktstift (5) aufweist.

3. Durchflußanzeiger nach Anspruch 1 oder 2, dadurch gekennzeichnet, daß die Ventilhülse (1) einen Absatz (15) aufweist, so daß ein mit dem Ablaufanschluß (12) verbundener Ringkanal (16) entsteht.

4. Durchflußanzeiger nach Anspruch 1, 2 oder 3, dadurch gekennzeichnet, daß der Ablaufanschluß (12) in einer die Ventilhülse (1) umgebenden Schraubhülse (2) vorgesehen ist.

5. Durchflußanzeiger nach Anspruch 1, 2 oder 3, dadurch gekennzeichnet, daß die Ventilhülse (1) zusammen mit dem Kontaktstifte (5) als Einschraubpatrone mit einem Gehäuse (17) verschraubt ist.

**Claims**

1. Flow indicator for hydraulic systems, particularly suitable for indicating the operational readiness of pumps, with the following features:
- an insulated contact pin (5) is fitted in a housing such that it forms a connection with an electrical signal circuit;
- the housing has an input port (11) and an output port (12) for pressurized oil;
- in a bore between the two ports (11 and 12) is an axially shiftable, spring-loaded piston (4);
- the input port (11) and the output port (12) are connected by means of a first through opening which determines the shifting flow rate and acts as an orifice;

- the piston (4) is actuated by the back preassure from a sufficient flow of pressurized oil, thereby allowing access to an additional opening (14);
- the piston (4) is free to move between two stops, one of which is formed by the contact pin (5) <u>characterized in that</u>
- a valve sleeve (1) surrounding the piston (4) has a permanently open transverse bore (13) which acts as an orifice and
- one or more openings (14) in the valve sleeve (1) are located behind the transverse bore (13) and in the piston's (4) direction of opening.

2. Flow indicator in accordance with Claim 1, <u>characterized in that</u> the piston (4) possesses a stop bolt (4A) for the contact pin (5).

3. Flow indicator in accordance with Claim 1 or 2, <u>characterized in that</u> the valve sleeve (1) has a reduced section (15), such that a circular duct (16) is formed with the output port (12).

4. Flow indicator in accordance with Claims 1, 2 or 3, <u>characterized in that</u> the output port (12) is attached to a screw-in sleeve (2) which surrounds the valve sleeve (1).

5. Flow indicator in accordance with Claims 1, 2 or 3, <u>characterized in that</u> the valve sleeve (1) together with the contact pin (5) is screwed into the housing (17) as a single screw-in unit.

**Revendications**

1. Indicateur de débit pour installations hydrauliques, notamment pour indiquer l'état de marche de pompes, comportant les particularités suivantes:
- un boîtier renferme une fiche de contact isolée (5) pour le raccordement à un circuit électrique de signalisation;
- le boîtier comporte un raccord d'entrée (11) et un raccord de sortie (12) d'huile sous pression;
- un piston (4) rappelé par un ressort est mobile axialement dans un alésage entre les deux raccords (11 et 12);
- le raccord d'entrée (11) et celui de sortie (12) sont reliés l'un à l'autre par un premier orifice de passage qui constitue un organe d'étranglement et qui définit un seuil de débit;
- le piston (4) est agencé pour coulisser sous l'effet de la pression de retenue en cas de débit suffisant de l'huile sous pression, ce qui libère un orifice de passage supplémentaire (14);
- le coulissement du piston (4) se fait entre deux butées dont l'une est la fiche de contact (5); caractérisé par les particularités suivantes:
- une douille de soupape (1) entourant le piston (4) comporte un alésage transversal constamment ouvert (13) servant d'organe d'étranglement, et
- un ou plusieurs orifices de passage (14) sont ménagés dans la douille de soupape (1), au-delà dudit alésage transversal (13) par rapport à la direction d'ouverture du piston (4).

2. Indicateur de débit selon la revendication 1, caractérisé en ce que le piston (4) comporte une tige de butée (4A) pour buter contre la fiche de contact (5).

3. Indicateur de débit selon la revendication 1 ou 2, caractérisé en ce que la douille de soupape (1) comporte un décrochement (15) agencé pour former un canal annulaire (16) communiquant avec le raccord de sortie (12).

4. Indicateur de débit selon la revendication 1, 2 ou 3, caractérisé en ce que le raccord de sortie (12) est prévu dans une douille filetée (2) entourant la douille de soupape (1).

5. Indicateur de débit selon la revendication 1, 2 ou 3, caractérisé en ce que la douille de soupape (1) est montée par vissage dans le boîtier (17) en commun avec la fiche de contact (5), sous la forme d'une cartouche vissée.

FIG.1

FIG.2